# EUROPEAN PATENT APPLICATION

(11) **EP 2 112 061 A2**
(43) Date of publication of application: **28.10.2009**
(21) Application number: 09153129.3
(22) Date of filing: 18.02.2009
(51) Int. Cl.: B62K 25/04

(54) **Shock absorbing frame for a bicycle**

(30) Priority: 24.04.2008 TW 97115026; 25.09.2008 TW 97136845
(71) Applicant: Giant Manufacturing Co., Ltd, Ta Chia Chen Taichung Hsien (TW)
(72) Inventor: Yang, Chao-Shun, Tainan City (TW)
(74) Representative: Jenkins, Peter David

(57) **Abstract**

A shock absorbing frame for a bicycle includes a seat tube (23) extending along a lengthwise axis (Y), a front frame unit (2), a rear frame unit (3), and a shock-absorbing member (4). The front frame unit (2) includes top and bottom tubes (21,22) extending rearwardly to terminate at upper and bottom ends (211,221), respectively. A connecting member (26) is disposed between the top and down tubes (21,22), and extends from one of the top and down tubes (21,22). The rear frame unit (3) includes a rear-axle stay (32) and a chain stay (31). The rear-axle stay (32) extends forwardly to bypass the lengthwise axis (Y), and has a first front mount end (322). The chain stay (31) has a second front mount end (311). A bottombracket (25) is disposed to interconnect the bottom end (221) and the second front mount end (311). The shock-absorbing member (4) is disposedbetween the first front mount end (322) and the connecting member (26) to damp the impact force propagating along the rear-axle stay (32).

## Description

This invention relates to a bicycle frame, more particularly to a bicycle frame with a rigid shock absorbing effect.

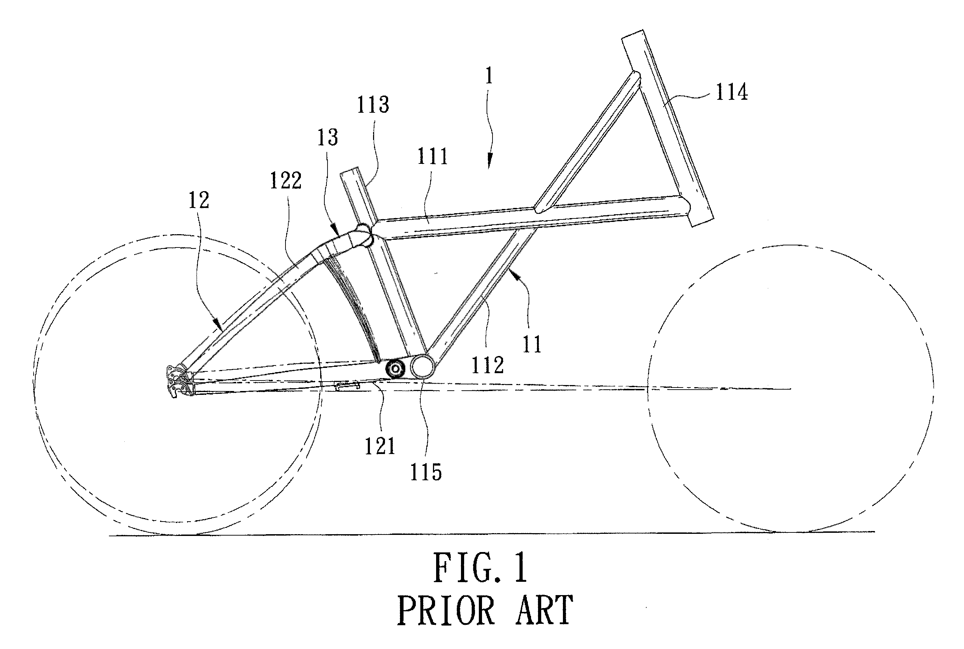

Referring to Fig. 1, a conventional shock absorbing bicycle frame 1 is shown to include a front frame unit 11, a rear frame unit 12, and a damping suspending member 13. The front frame unit 11 includes an upper tube 111 and a down tube 112 which have front ends connected to a head tube 114, a seat tube 113 having an upper portion connected to a rear end of the upper tube 111, and a coupling mount 115 connected to a lower portion of the seat tube 113 and a rear end of the lower tube 112. The rear frame unit 12 includes a chain stay 121 which is pivotably connected to the coupling mount 115, and a seat stay 122 which is connected to the chain stay 121. The damping suspending member 13 is disposed to interconnect the seat stay 122 and the seat tube 113 such that, when the bicycle frame 1 is subjected to an impact from a front wheel or a rear wheel, either the front frame unit 11 or the rear frame unit 11,12 is rotated about an axle center between the chain stay 121 and the coupling mount 115, so that the damping suspending member 13 is deformed by urging forces of the seat tube 113 and the seat stay 122 so as to absorb the shock and vibration caused by the impact.

However, due to the pivotal connection between the chain stay 121 and the coupling mount 115, when a bicycle equipped with the bicycle frame 1 is ridden over uneven ground, the seat tube 113, as well as a seat mounted thereon, will jolt up and down, thereby resulting in discomfort to the rider. The jolting is more serious especially when the bicycle frame 1 is used in an all-terrain or mountain bicycle. In addition, due to the pivotal engagement between the chain stay 121 and the coupling mount 115, the number of component parts of the bicycle frame 1 is increased, thereby increasing the overall weight of the bicycle.

An object of the present invention is to provide a shock absorbing frame which can exert an appropriate shock absorbing effect when the bicycle moves over uneven ground and which can prevent jolting and swaying of a bicycle seat.

According to this invention, the shock absorbing frame includes a seat tube, a front frame unit, a rear frame unit, a bottom bracket, and a shock-absorbing member. The seat tube extends along a lengthwise axis. The front frame unit includes a head tube, top and bottom tubes extending rearwardly from the head tube to terminate at upper and bottom ends, respectively, and cooperatively defining a mounting space, and a connecting member disposed in the mounting space and extending from one of the top and down tubes to terminate at a connecting end. The rear frame unit includes a rear-axle stay and a chain stay. The rear-axle stay has a first rear mount end for mounting on a rear axle of a rear wheel, and extends forwardly to bypass the lengthwise axis such that components of an impact force propagating along the rear-axle stay is not permitted to be transmitted to the seat tube. The rear-axle stay further has a first front mount end disposed in the mounting space to confront the connecting end of the connecting member. The chain stay has a second rear mount end coupled with the first rear mount end of the rear-axle stay, and extends forwardly to terminate at a second front mount end. The bottom bracket is disposed to interconnect the bottom end and the second front mount end on an outer surface thereof. The shock-absorbing member is disposed between the first front mount end and the connecting end to damp the components of the impact force propagating along the rear-axle stay.

Other features and advantages of the present invention will become apparent in the following detailed description of the preferred embodiments of the invention, with reference to the accompanying drawings, in which:
Fig. 1 is a schematic side view of a conventional shock absorbing bicycle frame;
Fig. 2 is a perspective view of the first preferred embodiment of a shock absorbing frame according to this invention;
Fig. 3 is a side view of the first preferred embodiment;
Fig. 4 is a side view of the second preferred embodiment of a shock absorbing frame according to this invention; and
Fig. 5 is a side view of the third preferred embodiment of a shock absorbing frame according to this invention.

Before the present invention is described in greater detail, it should be noted that same reference numerals have been used to denote like elements throughout the specification.

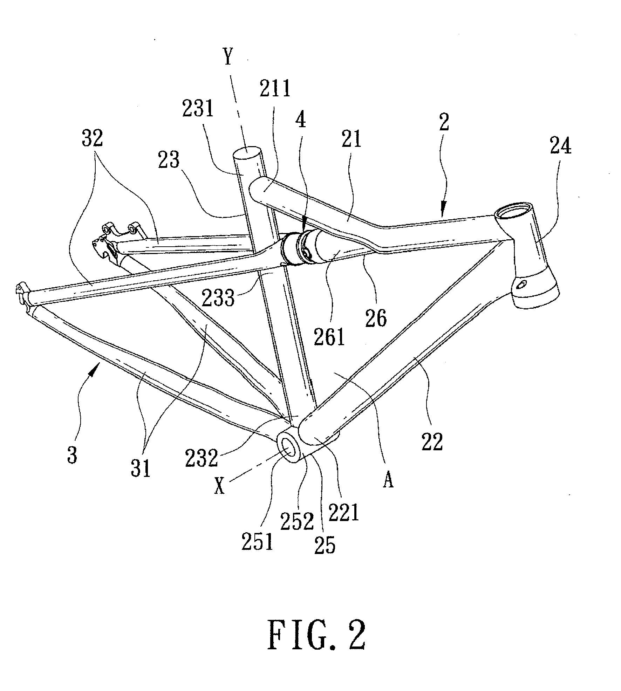

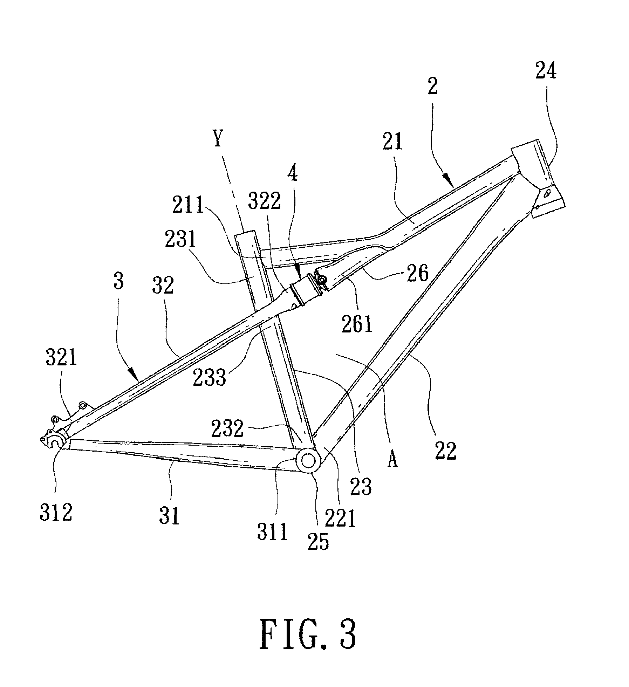

Referring to Figs. 2 and 3, the preferred embodiment of a shock absorbing frame for a bicycle according to the present invention is shown to comprise a seat tube 23, a front frame unit 2, a rear frame unit 3, a bottom bracket 25, and a shock-absorbing member 4.

The seat tube 23 is disposed to be suspended above the ground by front and rear wheels (not shown) of the bicycle, and extends along a lengthwise axis (Y) that is between the front and rear wheels and that is transverse to a rotating axis of the rear wheel.

The front frame unit 2 includes a head tube 24, a top tube 21, a down tube 22, and a connecting member 26. The head tube 24 extends in an upright direction parallel to the lengthwise axis (Y) . The top tube 21 extends rearwardly from the head tube 24 to terminate at an upper end 211. The down tube 22 extends rearwardly from the head tube 24 to terminate at a bottom end 221, and is disposed downwardly of the top tube 21 so as to cooperatively define a mounting space (A) with the top tube 21. The connecting member 26 is disposed in the mounting space (A). In this embodiment, the connecting member 26 is tubular, is integrally formed with the top tube 21, and terminates at a connecting end 261 that confronts the lengthwise axis (Y), i.e., facing rearwardly.

In particular, the seat tube 23 has upper and lower tube ends 231,232 which are securely connected to the upper and bottom ends 211,221, respectively, and an intermediate tube segment 233 interposed between the upper and lower tube ends 231,232.

The rear frame unit 3 includes a rear-axle stay 32 and a chain stay 31.

The rear-axle stay 32 includes two fork tubes which respectively have first rear mount termini serving as a first rear mount end 321 that is adapted for mounting on a rear axle of the rear wheel, which extend forwardly to flank the intermediate tube segment 233 of the seat tube 23, and which converge to be connected to each other so as to form a first front mount end 322. The first front mount end 322 is disposed in the mounting space (A) and confronts the connecting end 261 of the connecting member 26. Since the rear-axle stay 32 bypasses the lengthwise axis (Y), components of an impact force propagating along the rear-axle stay 32 are not permitted to be transmitted to the seat tube 23.

The chain stay 31 includes two fork tubes which respectively have second rear mount termini to serve as a second rear mount end 312 that is coupled with the first rearmount end 321, and which extend forwardly and downwardly to terminate at a second front mount end 311.

The bottombracket 25 has inner and outer surfaces 251, 252 which are opposite to each other and which surround a crank axis (X) that is parallel to the rotating axis of the rear wheel. The bottom end 221 of the down tube 22, the lower tube end 232 of the seat tube 23, and the second front mount end 311 of the chain stay 31 are secured on the outer tubular surfaces 252 by welding, locking, screw fastening, etc. Particularly, the lower tube end 232 is interposed between the bottom end 221 and the second front mount end 311.

The shock-absorbing member 4 has an elastically deformable damping structure, and is pivotally mounted on the first front mount end 322 and the connecting end 261 about pivoting axes parallel to the crank axis (X) so as to damp the component of the impact force propagating along the rear-axle stay 32.

By virtue of the structure of the fork tubes of the rear-axle stay 32 which extend forwardly to flank the seat tube 23, and by means of the structures of the fork tubes of the chain stay 31 and the front frame unit 2 which are coupled to form a rigid frame structure and which are not turnable relative to each other, the impact force applied to the bicycle when the bicycle is ridden over uneven ground is diverted so as not to propagate along the seat tube 23, and is damped by virtue of deformation of the shock-absorbing member 4. In addition, jolting and swaying of the seat tube 23 are prevented so as to diminish discomfort to the rider. Hence, the "rigid" structure between the chain stay 31 and the down tube 22 helps the rider to stabilize the bicycle so that he/she can ride the bicycle more efficiently. Consequently, the shock absorbing frame according to this invention is suitable for an all-terrain or mountain bicycle. Furthermore, since no pivoting means is needed to pivotally connect the chain stay 31 to the bottombracket 25, the number of component parts of the shock absorbing frame according to this invention is relatively less, thereby reducing manufacturing costs and the overall weight of the bicycle.

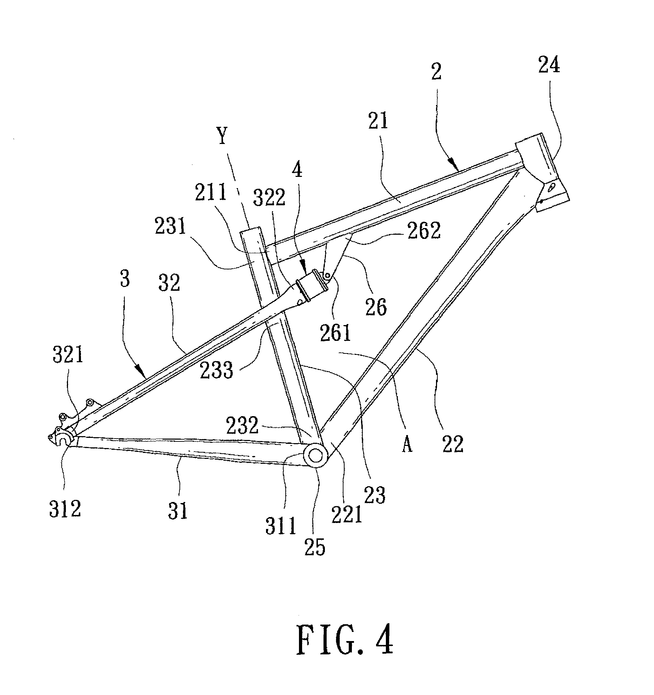

Referring to Fig. 4, the second preferred embodiment of a shock absorbing frame for a bicycle according to this invention is shown to be similar to the first embodiment in construction, except that the connecting member 26 is in the form of a pair of lugs and has a base end 262 opposite to the connecting end 261 and integrally formed with the top tube 21.

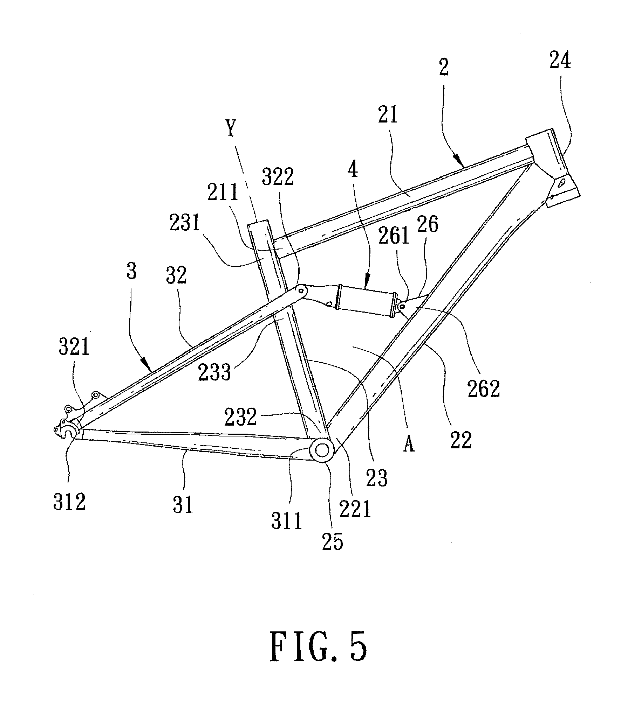

Referring to Fig. 5, the third preferred embodiment of a shock absorbing frame for a bicycle according to this invention is shown to be similar to the first embodiment in construction, except that the connecting member 26 is in the form of a pair of lugs and has a base end 262 opposite to the connecting end 261 and integrally formed with the down tube 22.

## Claims

1. A shock absorbing frame for a bicycle which includes a rear axle for mounting of a rear wheel rotatably thereon about a rotating axis, and which defines a lengthwise axis (Y) that is disposed forwardly of the rear axle and that is transverse to the rotating axis, said shock absorbing frame comprising:
a seat tube (23) which is disposed to be suspended above the ground, and which extends along the lengthwise axis (Y);
a front frame unit (2) including
a head tube (24),
a top tube (21) extending rearwardly from said head tube (24) to terminate at an upper end (211),
and
a down tube (22) extending rearwardly from said head tube (24) to terminate at a bottom end (221), and disposed downwardly of said top tube (21) so as to cooperatively define a mounting space (A) with said top tube (21);
a rear frame unit (3) including
a rear-axle stay (32) which has a first rear mount
end (321) that is adapted for mounting on the rear axle, and
a chain stay (31) which has a second rear mount end (312) coupled with said first rear mount end (321) of said rear-axle stay (32), and which extends forwardly to terminate at a second front mount end (311); and
a bottom bracket (25) which has a crank axis (X) that is parallel to the rotating axis, said bottom bracket (25) being disposed to interconnect said bottom end (221) and said second front mount end (311), **characterized in that**:
said front frame unit (2) further includes a connecting member (26) disposed in said mounting space (A) and extending from one of said top and down tubes (21,22) to terminate at a connecting end (261);
said rear-axle stay (32) extending forwardly to bypass the lengthwise axis (Y) such that components of an impact force propagating along said rear-axle stay (32) is not permitted to be transmitted to said seat tube (23), said rear-axle stay (32) further having a first front mount end (322) which is disposed in said mounting space (A) and which confronts said connecting end (261) of said connecting member (26);
said shock absorbing frame further comprising a shock-absorbing member (4) which is disposed between said first front mount end (322) and said connecting end (261) to damp the components of the impact force propagating along said rear-axle stay (32).

2. The shock absorbing frame according to Claim 1, **characterized in that** said seat tube (23) has upper and lower tube ends (231,232) which are securely coupled to said upper and bottom ends (211,221), respectively, and an intermediate tube segment (233) interposed between said upper and lower tube ends (231,232), said lower tube end (232) being securely connected to said bottom bracket (25).

3. The shock absorbing frame according to Claim 2, **characterized in that** said rear-axle stay (32) includes two fork tubes which respectively have first rear mount termini serving as said first rear mount end (321), and which extend forwardly to flank said intermediate tube segment (233) and which converge to be connected to each other so as to form said first front mount end (322).

4. The shock absorbing frame according to Claim 2, **characterized in that** each of said second front mount end (311), said lower tube end (232), and said bottom end (221) is welded to an outer surface (252) of said bottom bracket (25).

5. The shock absorbing frame according to Claim 1, **characterized in that** said shock-absorbing member (4) is pivotably mounted on said connecting end (261) about a pivoting axis parallel to the crank axis (X).

6. The shock absorbing frame according to Claim 1, **characterized in that** said connecting member (26) is tubular and is integrally formed with said top tube (21).

7. The shock absorbing frame according to Claim 1, **characterized in that** said connecting member (26) is in form of a lug which has a base end (262) opposite to said connecting end (261) and integrally formed with said top tube (21).

8. The shock absorbing frame according to Claim 1, **characterized in that** said connecting member (26) is in form of a lug which has a base end (262) opposite to said connecting end (261) and integrally formed with said down tube (22).
